# EUROPEAN PATENT SPECIFICATION

(11) **EP 0 708 702 B1**
(45) Date of publication and mention of the grant of the patent: **14.06.2000**
(21) Application number: 93914573.6
(22) Date of filing: 30.06.1993
(51) Int. Cl.: B29C 47/06, B29C 49/00

(54) **METHOD AND APPARATUS FOR FORMING A DOUBLE WALLED THERMOPLASTIC TUBE WITH INTEGRAL BELLS**
VERFAHREN UND VORRICHTUNG ZUR HERSTELLUNG EINES VERBUNDROHRES MIT ROHR-MUFFEN
PROCEDE ET APPAREIL PERMETTANT DE FORMER UN TUYAU THERMOPLASTIQUE A DOUBLE PAROI A EMBOITEMENTS INTEGRES

(43) Date of publication of application: 01.05.1996
(73) Proprietor: LUPKE, Manfred Arno Alfred, Concord, Ontario L4K 2Z3 (CA)
(72) Inventor: LUPKE, Manfred Arno Alfred, Concord, Ontario L4K 2Z3 (CA)
(74) Representative: Brooks, Nigel Samuel
(86) International application number: CA9300260
(87) International publication number: WO9501251

(56) References cited:
- EP-A- 0 563 575
- WO-A-88/05377
- WO-A-90/14208
- FR-A- 2 264 649
- US-A- 4 846 660

## Description

### FIELD OF THE INVENTION

This invention relates to a method and apparatus for forming double walled thermoplastic tube having a corrugated outer wall and a smooth inner wall and having integrally formed bell sections along its length.

### BACKGROUND OF THE INVENTION

Double walled thermoplastic tube may be made by an apparatus of the travelling mold tunnel type as disclosed, for example, in U.S. Patent No. 4,226,580 issued October 7th, 1980 to Gerd P.N. Lupke and Manfred A. A. Lupke, U.S. Patent No, 4,500,284 issued February 19, 1985 to Manfred A. A. Lupke, U.S. Patent No. 4,510,013 issued April 9, 1985 to Manfred A. A. Lupke and Gerd P.H. Lupke, and U.S. Patent No. 4,534,923 issued August 13, 1985 to Manfred A. A. Lupke. Numerous other patents generally concern travelling mold type apparatus for forming double walled tube and numerous additional patents concern travelling mold tube tunnels for formation of single walled tube and also for ribbed tube. The patents referred to are intended to be merely exemplary of the large number in the field.

Of the patents mentioned, however, U.S. Patent No. 4,534,923 specifically concerns the formation of bells in the continuous production of double walled tube. It is necessary to form such bells along the length of tube for various reasons among which is the desirability of providing a smooth walled portion of tube at which portion the tube may be cut. The smooth walled end portion of cut tube is suitable for interfacing with other tube or coupling to other structures. Where double walled tube is concerned, the provision of such bells has caused a problem. In the early days of utilization of such tube, bells were formed with a double skin and an air gap between the skins. After molding of the tube the inner skin was cut away. Such a procedure is described in U.S. Patent No. 4,500,284. Later it was found possible to press the softened inner wall against the bell section molded into the outer wall to form a stronger bell comprising of both walls combined together. Such a system is described and claimed in U.S. Patent No. 4,534,923.

Nevertheless, problems remained in accurately forming suitable bells without undue expense. For example, the complex mechanical arrangements required for pressing the inner tube against the outer tube bell section described in U.S. Patent No. 4,534,923, were neither very inexpensive nor were they maintenance free.

### SUMMARY OF THE INVENTION

It has now been discovered that the inner tube may be forced against the outer bell sections by surprisingly simple means.

According to the invention, there is provided a method of forming double walled pipe of thermoplastics material by extruding a first parison into a travelling mold tunnel, comprising a tubular mold surface having a first portion having corrugations extending therearound for molding corrugated tube, and a second portion which is belled with respect to said first portion for molding a cuff portion of the tube; the method comprising extruding a first outer parison of molten thermoplastics material from a first extrusion orifice into the mold tunnel; biasing the first outer parison against the respective first and second portions to form respectively a corrugated tube section having troughs and crests therearound and a belled tube section; applying a pressure differential between the inner and outer surfaces of the first outer parison at a number of points about the circumference of an upstream region of the second portion to deform the first outer parison away to form balloon like protuberances therefrom, puncturing the balloons to form holes providing air escape passages through the first parison, extruding a second inner parison of molten thermoplastics material from a second extrusion orifice downstream of the first extrusion orifice into the mold tunnel and into the first outer parison, biasing the second inner parison against troughs of the corrugated tube section lying against the first mold surface to form double walled tube and into the belled tube section to form a laminate therewith. Air trapped between the first and second parisons in the belled region is expelled from the pipe through the air escape passages in the first parison.

The means for biasing the first outer parison against the first and second mold portions may be pneumatic pressure from inside the parison and/or vacuum pressure from outside, i.e. the outer parison may be subjected to either or both blow or vacuum molding.

Preferably, suction is applied from the exterior to create the pressure differential to form the protuberances. Such suction may be applied through radial passages which open at the outer surface of the parison. Thus, the orifice of each passage bounds a small area of the parison to concentrate the suction at that area and to draw the protuberance into the passage. If a reverse pressure differential is to be applied, then positive pressure will be exerted through the passage. Again, the orifice of the passage bounds a discrete area on the outer surface of the parison and concentrates the pressure against that area. In this case, however, the protruding balloon will be blown towards the inside of the bell cavity.

The balloons may be ruptured either by the suction or positive pressure alone, or, when the protuberances are drawn into the passages under suction, by a suitably sharp projection in the passage. Such projection might be a needle or a knife.

The holes made by rupturing the protuberances should be very small and only sufficient to allow the escape of gas pressure from between the inner and outer parisons when the inner parison is later applied. The holes formed in this way may, for example, be as small as from 0.01 to 2 mm depending upon the wall thickness.

The second inner parison may be biased respectively against the troughs of the corrugated tube section or against the belled tube section by pneumatic pressure or by similar means to those disclosed in U.S. Patent No. 4,534,923 previously referred to.

The second mold portion may be shaped to flare into a larger diameter bell section at the upstream end. The second mold surface may also, or alternatively, include a circumferential recess to compliment an inner circumferential groove in the bell section. The second mold portion may also or alternatively include an inwardly projecting circumferential ridge to form a complimentary inward projection in the belled section. The invention also includes apparatus for carrying out the invention.

### BRIEF DESCRIPTION OF THE DRAWINGS

Embodiments of the invention will now be described by way of example with reference to the drawings in which;

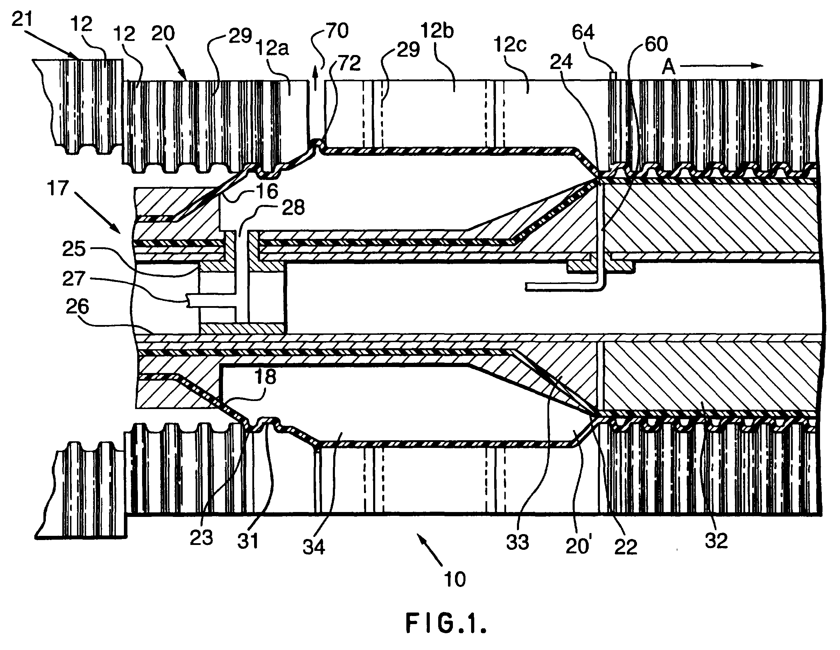

Figure 1 is a rough simplified longitudinal section of apparatus for forming a double walled plastic tube, including a bell forming section according to the invention;
Figure 2 is an enlarged section of a detail of the apparatus of Figure 1;
Figure 3 is an enlarged detail of one embodiment of a protuberance forming passage of Figure 1;
Figure 4 is a detail of another embodiment of the protuberance forming passage of Figure 1;
Figure 5 is a similar section to that of Figure 2 but showing the mold tunnel slightly advanced;
Figure 6 is a similar section to that of Figure 5 with the mold tunnel still further advanced;
Figure 7 shows a section of another belled portion of the mold tunnel; and
Figure 8 is an illustrative view of a pipe coupling formed by a process or apparatus according to the invention.

### DETAILED DESCRIPTION ACCORDING TO THE PREFERRED EMBODIMENTS OF THE PRESENT INVENTION

Referring to the drawings, the illustrated apparatus includes a travelling mold 10 advancing in the direction of arrow A. In this embodiment, the mold consists of two sets of mold blocks 12, circulating on respective paths as described, for example, in Canadian Patent No. 1,083,766. This type of mold is not essential, however, and other embodiments of the invention may employ other forms of travelling mold tunnel.

The mold 10 is associated with an extrusion die having an elongate nozzle 17 with an upstream annular orifice 16 for extruding a first, outer parison 18 into the mold cavity 20 of the mold which comprises a corrugated mold cavity 21 and a belled mold cavity 34. The nozzle 17 has an additional downstream orifice 22 for extruding a second inner parison 24 into the outer tube molded from the first parison.

The die is also provided with a central core pipe 26. Pressurized air may be supplied through a pipe 27 running along the core pipe 26 and radial passages 28 inside the outer tube 18 upstream of the downstream die orifice 22. This pressurized air serves to blow mold the outer tube into the mold cavity 20 to mold it in crests 23 and troughs 31 in mold cavity 21 and into the shape of a bell in mold cavity 34.

Downstream of orifice 22, the core pipe 26 carries a cooling plug 32 having a cooled outer surface. The cooling plug 32 presses the inner parison 24 against the corrugated outer parison 18 to fuse the tubes into a double walled pipe with a corrugated outer wall and a smooth inner wall in the mold cavity 21.

At selected points along the travelling mold, the mold blocks 12a, 12b and 12c, are shaped to form the outer wall into the cavity 34 The outer parison 18 is molded into this bell section by blow molding, utilizing pneumatic pressure through radial passages 28 from pipe 27 within core pipe 26 by means of a spider 25. Alternatively, or additionally vacuum molding may be applied through passages 29 in mold blocks 12.

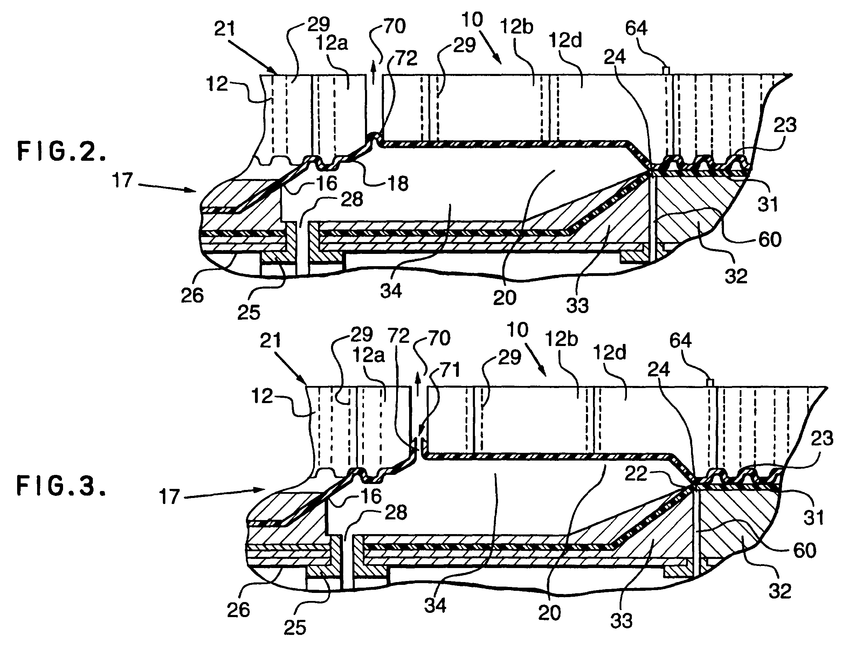

At an upstream region of bell section 34 a number of small diameter passages 70 are provided around the circumference of the mold to apply differential pressure between the interior and the exterior of outer tube wall 18 at a point where it is still soft or where it is heated to soften it. Suction may be applied through passages 70 to form small protruding balloons 72 of parison 18 into each passage 70. These are ruptured to release pressure from within outer tube wall 18. (see Figure 3). The actual orifice 71 may be located at the surface of outer tube wall 18 so as to concentrate suction over an area of parison equivalent to the area of the orifice 71.

It is of course possible to utilize high pressure in passages 70 to project a small balloon inwardly into bell section 34.

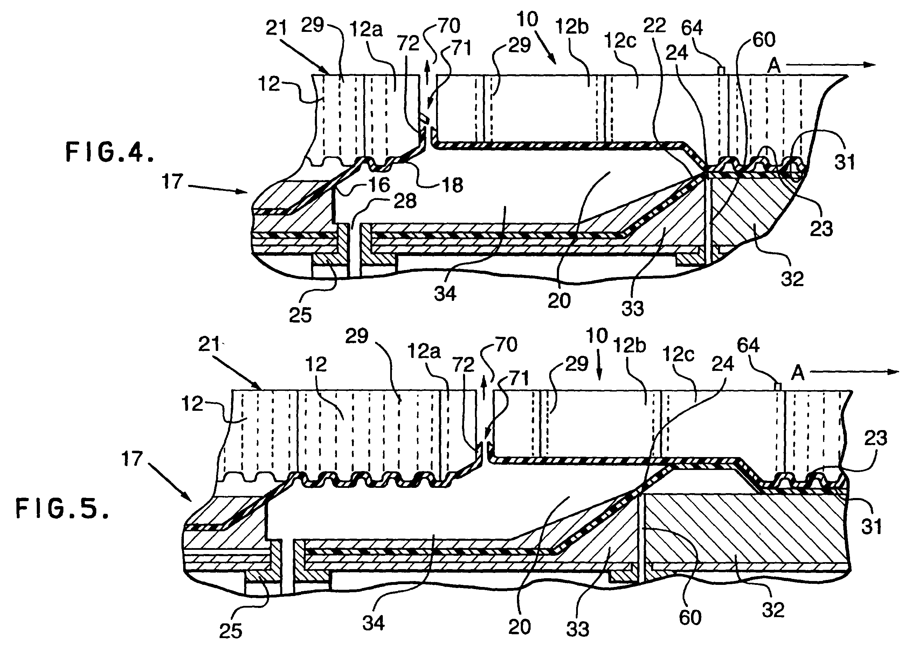

Protruding balloons 72 are ruptured either solely by differential pressure between the inside of bell section 34 and the outside of bell suction 34, or the rupture is aided by the presence of a sharp projection 80 within channel 70. Such a projection may be a needle or knife (see, for example, Figure 4). The use of an aid such as the needle or knife 80 may be only possible when the protruding balloon 72 is drawn into channel 70 under suction. If it is forced into bell section 34, it may be necessary to rupture it using air pressure alone,

Inner parison wall 24 may be biased against the troughs 21 by means of the supply of pressurized air to the interior of inner tube wall 24 through radial passage 60. Passage 60 may be located just downstream of downstream orifice 22 so that it acts on inner parison 24 while it is still soft and is able to bond with the troughs 31 of outer tube wall formed from parison 18.

Radial passages 60 may be formed by a small gap between cooling plug 32 and nose cone 33 therefor. This small gap 60 between the cooling plug 32 and the nose cone may be very small, say for example the gap may be around 10 thousandths of an inch. Continued travel of the travelling mold in the direction of arrow A causes the inner tube formed from inner parison 24 to travel over the surface of cooling plug 32 in contact with troughs 31 to form double walled corrugated tube with the corrugated outer tube formed from parison 18.

When a belled section 34 of mold passes the orifice 22, the pneumatic pressure from pipe 60 tends to bias inner parison 24, outwardly. Suction through passages 70 through the protruding ruptured balloons 72 in the outer parison 18 at least removes gas resistance to such outward bias from within belled section 34. The suction through passages 70 may also positively enhance the outward bias on inner tube wall 24.

The sequence of operations may be seen in Figures 2 to 6. Figure 2 shows inner wall 24 biased against troughs 31 by pneumatic pressure from passage 60. There may be little or no tendency for the inner wall 24 to enter the corrugations due to air entrapped therein.

Figures 3 and 4 show an enlarged detail of the wall of the parison being ballooned into the channels 70. The area of the ballooning is confined by the mouth or orifice 71 of each channel 70 and, thus, the protruding balloon may be shaped as a finger or cylinder. In Figure 3, the balloon is shown rupturing under gas pressure alone but, as shown in Figure 4, the projection 80 is provided to aid the rupture. Again, it is emphasized that pressure may be used instead of suction so that the protrusion is in the opposite direction. In this case, although the area of the parison wall which ballooned will be confined by the mouth or orifice 71 or, the protrusion itself may not be so finger shaped but may be more generally bulbous.

The use of projection 80 or other sharp, pointed instrument may serve to control the size of the eventual rupture. This may be important, since the size of rupture should only be sufficient to allow the escape of gas from bell section 34 but should not be big enough to affect the strength of the tube or, indeed, affect its physical properties or aesthetic appearance detrimentally.

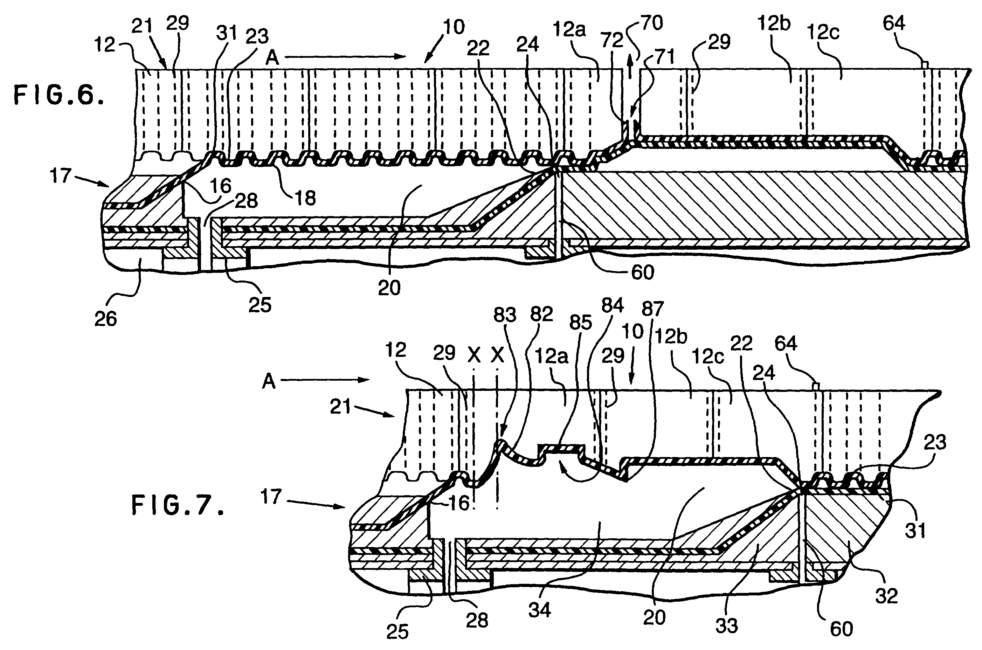

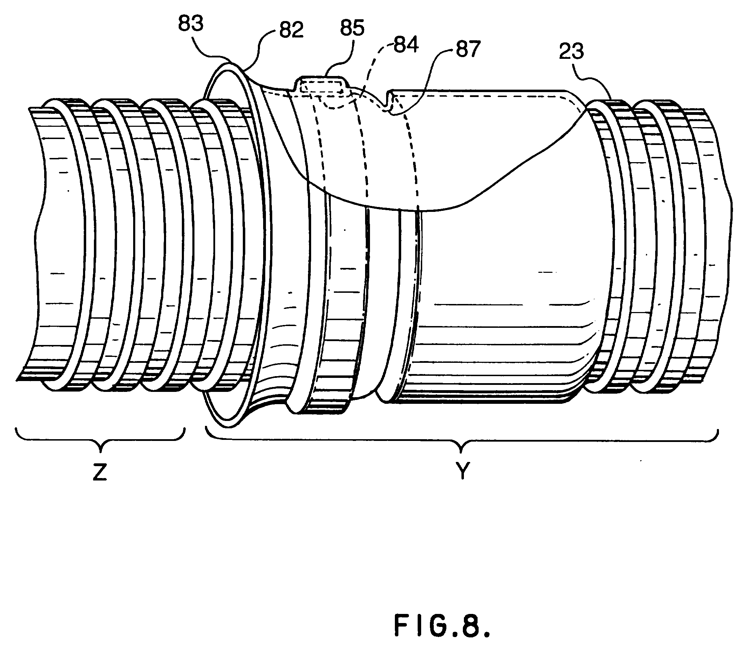

Figure 5 shows the mold tunnel advanced in the direction of arrow A so that the central part of belled section 34 is generally coincident with nozzle orifice 22 for inner all 24. The inner wall parison 24 may be seen pushed into mold cavity 34 to be against outer tube wall formed from parison 18. The inner tube wall is still soft and laminates with the outer wall to form a cuff or coupling part of the eventual tube (see Figure 8). Gas from within mold cavity 34 escapes through ruptured balloons 72 of the outer wall formed from parison 18.

Figure 6 shows the mold tunnel even further advanced so that the inner wall has closed balloons 72 from the inside and no further gas escape therethrough is possible. Inner parison 24 will, as the next corrugated section advances, lose its tendency to confirm to the mold surface and will bond with the trough 31 of the corrugations.

Figure 7 shows a modified mold cavity 34 having mold surfaces to enhance features of the eventual coupling or cuff of tube to be formed. Thus, the mold cavity 34 of Figure 7 includes an outwardly flared portion 82 which forms an enlarged mouth 83 in the eventual coupling (see Figure 8). In practice, the section of tube between broken lines x - x in Figure 7 is cut away so that bracketed pipe portion Y forms a female coupling part at one end of a pipe and bracketed pipe portion Z forms a male coupling part for insertion into the female part as shown in Figure 8. The enlarged mouth 83 due to flared portion 82 may facilitate entry of part Z into part Y.

An internal seating 85 for a seating O-ring may be provided by means of a groove 84 around the circumference of mold cavity 34. A suitable O-ring seated in the resulting seating will extend around the part Z when inserted to seal it with part Y.

Means to prevent too easy separation of the assembled coupling may be provided by inwardly directed profiling of the mold cavity 34 to form an internally directed annular hook 87 of the resulting coupling. Hook 87 will extend inwardly and engage a crest 23 of the part Z as shown in Figure 8.

The actual thickness of the coupling part Y may be influenced by speeding up or slowing down the speed of the travelling mold tunnel while mold cavity 34 is passing orifices 16 and 22. Thus a coupling of considerable strength and thickness may be produced.

In the corrugated section 21 the inner wall extends smoothly within the cuter wall and only contacts the outer corrugated wall at the troughs 31. Thus it is not necessary to bias the inner wall to mold into the corrugations and therefore it is not necessary to allow for such egress of air from the corrugations that the inner wall will mold into the troughs. It is, however, necessary to insure that the pressure within the sealed corrugations between the inner and outer walls is not such as to collapse the corrugations once the final tube has cooled. It may be possible to adjust the suction in channels 29 and to provide sharp needles arranged in channels 29 to puncture the apex of each crest 23 of the corrugation. Such punctures may allow for ingress of air to equalize pressure in the corrugations. Such punctures may be very small indeed and at least probably, smaller than the ruptures of balloons 72.

Although various preferred embodiments of the present invention have been described in detail, it will be appreciated by those skilled in the art, that variations may be made without departing from the scope of the appended claims.

## Claims

1. A method of producing double wail plastic pipe from an extruder with a nozzle (17) having a first orifice (16) and a second orifice (22) downstream of the first orifice in a moving mold tunnel having a first region (21) with a corrugated mold surface and a second region (34) with a belled mold surface, the second region also having mold wall openings (70) therethrough, said method comprising extruding a first parison (18) of molten thermoplastics material from the first orifice into the mold tunnel, forming the first parison against the corrugated mold surface to shape alternating crests and troughs (23, 31) and against the belled mold surface to shape a bell in the first parison in forming respectively corrugated and cuffed pipe parts, and being characterized by subjecting the first parison to a pressure differential through said mold wall openings to form balloons (72) in said first parison, rupturing the balloons to produce air escape passages in the bell of the first parison, extruding a second parison (29) of molten thermoplastics material from the second orifice into the mold tunnel, forcing the second parison to lie against and form a solid laminate with the troughs and the bell in the first parison and expelling air between the second parison and the bell of the first parison out of the pipe through the air escape passages in the first parison.

2. A method as claimed in Claim 1, wherein the balloons (72) are formed within the mold wall openings of the second region of the mold tunnel.

3. A method as claimed in Claim 1, wherein the balloons are formed internally of the nozzle pushed inwardly from the belled mold surface.

4. A method as claimed in Claim 2, wherein the balloons are formed by positive air pressure within the mold tunnel.

5. A method as claimed in Claim 2, wherein the balloons are formed by suction through the mold wall openings in the second region.

6. A method as claimed in Claim 5, wherein the suction through the mold wall openings in the second region of the mold tunnel is sufficient to rupture the first parison without rupturing the second parison.

7. A method as claimed in Claim 1, wherein the first parison is ruptured by moving the first parison onto a piercing tool (80) provided in each mold wall opening.

8. A method as claimed in Claim 7, wherein the second parison is forced against the bell in the first parison by pneumatic pressure and against the troughs in the first parison by a combination of pneumatic pressure and mechanical pressure.

9. Apparatus for producing double wall plastic pipe, said apparatus comprising an extruder having a nozzle (17) with a first orifice (16) and a second orifice (22) downstream of the first orifice, the nozzle feeding first and second parisons (18, 24) of thermoplastic material through the first and second orifices respectively to form outer and inner pipe walls within a moving mold tunnel having a first region (21) with a corrugated mold surface and a second region (34) having a belled mold surface to form respectively a corrugated pipe part and a cuffed pipe part, the apparatus being characterized by the belled mold surface having mold wall openings (70) through which escape openings are made in the outer wall of the cuffed pipe part, said apparatus including means to force the first parison against, and form alternating crests and troughs (23, 31) on, the corrugated mold surface and pressure differential means to force the first parison against, and to form a bell on the belled mold surface, and to form balloons (72) in the first parison at the wall openings, means to rupture the balloons to provide the air escape openings, and means to force the second parison against, and to form a solid laminate with, the troughs of the first parison and with the bell of the first parison where air between the first and second parisons is released through the air escape openings in the first parison and out of the apparatus through the mold wall openings of the belled mold surface.

10. Apparatus as claimed in Claim 9, wherein the first region of the mold tunnel further includes a recess forming mold surface (85) and a hook forming mold surface (87).

11. Apparatus as claimed in Claim 9, wherein said means to force the first parison against the corrugated and belled mold surfaces comprises pneumatic pressure.

12. Apparatus as claimed in Claim 9, wherein a combination of pneumatic and mechanical pressure (32) is used to force the second parison against the troughs of the first parison and wherein only pneumatic pressure is used to force the second parison against the bell of the first parison.

13. Apparatus as claimed in Claim 11, wherein the pneumatic pressure is sufficient to rupture the first parison at the mold wall openings in the second region of the mold tunnel without rupturing the second parison.

14. Apparatus as claimed in Claim 9, wherein the mold wall openings are provided in an upstream part of the second region of the mold tunnel.

15. Apparatus as claimed in Claim 9 wherein a piercing device (80) is provided in each mold wall opening to rupture the balloons.

16. Apparatus as claimed in Claim 9, including means to puncture the crests in the first parison for releasing air trapped between the first and second parisons in the crests.

## Patentansprüche

1. Verfahren zum Herstellen eines doppelwandigen Kunststoffrohres aus einem Extruder mit einer eine erste Mündung (16) und eine stromabwärts der ersten Mündung angeordnete zweite Mündung (22) aufweisenden Düse (17) in einen sich bewegenden Formwerkzeugkanal hinein, der eine erste Zone (21) mit einer gewellten Formwerkzeugoberfläche und eine zweite Zone (34) mit einer glockenförmigen Formwerkzeugoberfläche aufweist, wobei die zweite Zone auch Formwerkzeugwandöffnungen (70) darin aufweist, wobei das Verfahren aufweist
- Extrudieren eines ersten Vorformlings (18) aus geschmolzenem Themoplastmaterial aus der ersten Mündung in den Formwerkzeugkanal hinein,
- Anformen des ersten Vorformlings gegen die gewellte Formwerkzeugoberfläche, zum Ausformen sich abwechselnder Wellenberge und Wellentäler (23, 31), und gegen die glockenförmige Formwerkzeugoberfläche zum Ausformen einer Glocke in dem ersten Vorformling beim Ausbilden gewellter bzw. muffenförmiger Rohrabschnitte,
- und gekennzeichnet ist durch Beaufschlagen des ersten Vorformlings mit einer Druckdifferenz durch die Formwerkzeugwandöffnungen hindurch zum Ausbilden von Ballons (72) in dem ersten Vorformling, Durchbrechen der Ballons, um Luftaustrittspassagen in der Mantelglocke des ersten Vorformling zu erzeugen, Extrudieren eines zweiten Vorformlings (29) aus aufgeschmolzenem Thermoplastmaterial aus der zweiten Mündung in den Formwerkzeugkanal hinein, Erzwingen, daß der zweite Vorformling an den Wellentälern und der Glocke des ersten Vorformlings anliegt und mit diesen ein stabiles Laminat bildet, und Austreiben der zwischen dem zweiten Vorformling und der Glocke des ersten Vorformlings befindlichen Luft durch die Luftaustrittspassagen in dem ersten Vorformling hindurch aus dem Rohr heraus.

2. Verfahren nach Anspruch 1, wobei die Ballons (72) innerhalb der Formwerkzeugwandöffnungen der zweiten Zone des Formwerkzeugkanals ausgebildet werden.

3. Verfahren nach Anspruch 1, wobei die Ballons im Inneren der Düse von der glockenförmigen Formwerkzeugoberfläche nach innen geschoben ausgebildet werden.

4. Verfahren nach Anspruch 2, wobei die Ballons durch Überdruck innerhalb des Formwerkzeugkanals ausgebildet werden.

5. Verfahren nach Anspruch 2, wobei die Ballons mittels Ansaugen durch die Formwerkzeugwandöffnungen in der zweiten Zone hindurch ausgebildet werden.

6. Verfahren nach Anspruch 5, wobei das Ansaugen durch die Formwerkzeugwandöffnungen in der zweiten Zone des Formwerkzeugkanals ausreicht, den ersten Vorformling zu durchbrechen ohne den zweiten Vorformling zu durchbrechen.

7. Verfahren nach Anspruch 1, wobei der erste Vorformling mittels Bewegen des ersten Vorformlings an ein in jeder Formwerkzeugwandöffnung vorgesehenes Perforierwerkzeug (80) heran durchbrochen wird.

8. Verfahren nach Anspruch 7, wobei der zweite Vorformling mittels pneumatischem Drücken gegen die Glocke in dem ersten Vorformling und mittels einer Kombination von pneumatischen und mechanischem Drücken gegen die Wellentäler in dem ersten Vorformling gedrückt wird.

9. Vorrichtung zum Herstellen doppelwandiger Kunststoffrohre, wobei die Vorrichtung einen Extruder aufweist, der eine Düse (17) mit einer ersten Mündung (16) und einer stromabwärts der ersten Mündung angeordneten zweiten Mündung (22) aufweist, wobei die Düse einen ersten Vorformling (18) und einen zweiten Vorformling (24) aus Thermoplastmaterial durch die erste bzw. zweite Mündung hindurch liefert, um eine äußere bzw. eine innere Rohrwand innerhalb eines sich bewegenden Fomwerkzeugkanals auszubilden, der zum Bilden eines gewellten Rohrabschnitts bzw. eines muffenförmigen Rohrabschnitts eine erste Zone (21) mit einer gewellten Formwerkzeugoberfläche und eine zweite Zone (34) mit einer glockenförmigen Fomwerkzeugoberfläche aufweist, und die Vorrichtung dadurch gekennzeichnet ist, daß die glockenförmige Formwerkzeugoberfläche Formwerkzeugwandöffnungen (70) aufweist, durch welche hindurch Austrittsöffnungen in der Außenwand des muffenförmigen Rohrabschnitts gebildet werden, wobei die Vorrichtung Mittel zum Zwängen des ersten Vorformlings gegen die gewellte Formwerkzeugoberfläche und zum Ausbilden sich abwechselnder Wellenberge und -täler (23, 31) an der gewellten Formwerkzeugoberfläche, Druckdifferenzmittel zum Zwängen des ersten Vorformlings gegen und Ausbilden einer Glocke an der glockenförmigen Formwerkzeugoberfläche und zum Ausbilden von Ballons (72) in dem ersten Vorformling an den Wandöffnungen, Mittel zum Durchbrechen der Ballons, um Luftaustrittsöffnungen zu schaffen, und Mittel zum Zwängen des zweiten Vorformlings gegen und Ausbilden eines stabilen Verbundes mit den Wellentälern des ersten Vorformlings und mit der Glocke des ersten Vorformlings aufweist, wobei zwischen dem ersten und zweiten Vorformling befindliche Luft durch die Luftaustrittsöffnungen in dem ersten Vorformling abgeführt wird und aus der Vorrichtung heraus durch die Formwerkzeugwandöffnungen der glockenförmigen Formwerkzeugoberfläche hindurch abgeführt wird.

10. Vorrichtung nach Anspruch 9, wobei die erste Zone des Formwerkzeugkanals eine Formwerkzeugoberfläche (85) zum Bilden einer Tasche und eine Formwerkzeugoberfläche (87) zum Bilden eines Hakens einschließt.

11. Vorrichtung nach Anspruch 9, wobei die Mittel zum Zwängen des ersten Vorformlings gegen die gewellte und gegen die glockenförmige Formwerkzeugoberfläche Pneumatikdruck umfassen.

12. Vorrichtung nach Anspruch 9, wobei eine Kombination von pneumatischem und mechanischem Druck (32) verwendet wird, um den zweiten Vorformling gegen die Wellentäler des ersten Vorformlings zu zwängen und wobei ausschließlich Pneumatikdruck verwendet wird, um den zweiten Vorformling gegen die Glocke des ersten Vorformlings zu zwängen.

13. Vorrichtung nach Anspruch 11, wobei der Pneumatikdruck ausreicht, den ersten Vorformling an den Formwerkzeugwandöffnungen in der zweiten Zone des Formwerkzeugkanals zu durchbrechen ohne den zweiten Vorformling zu durchbrechen.

14. Vorrichtung nach Anspruch 9, wobei die Formwerkzeugwandöffnungen in einem stromaufwärts liegenden Abschnitt der zweiten Zone des Formwerkzeugkanals vorgesehen sind.

15. Vorrichtung nach Anspruch 9, wobei eine Perforiereinrichtung (80) in jeder Formwerkzeugwandöffnung zum Durchbrechen der Ballons vorgesehen ist.

16. Vorrichtung nach Anspruch 9, die Mittel zum Durchstechen der Wellenberge in dem ersten Vorformling aufweist, um die in den Wellenbergen zwischen dem ersten und dem zweiten Vorformling eingeschlossene Luft abzuführen.

## Revendications

1. Procédé pour fabriquer un tuyau en matière plastique à paroi double à partir d'une extrudeuse comportant une buse (17) possédant un premier orifice (16) et un orifice (22) en aval du premier orifice dans un tunnel de moule mobile possédant une première région (21) pourvue d'une surface de moule cannelée et une seconde région (34) comportant une surface de moule en forme de cloche, la seconde région possédant également des ouvertures de paroi de moule (70) qui la traversent, ledit procédé consistant à extruder une première paraison (18) formée d'une matière thermoplastique fondue à partir du premier orifice, dans le tunnel de moule; mettre en forme la première paraison contre la surface de moule cannelée de manière à former alternativement des crêtes et des creux (23,31) et contre la surface de moule en cloche de manière à former une cloche dans la première paraison lors de la formation de parties de tuyau respectivement cannelée et à manchon, et étant caractérisé en ce qu'on soumet la première paraison à une pression différentielle au moyen desdites ouvertures formées dans la paroi du moule de manière à former des ballonnets (72) dans ladite première paraison, que l'on rompt les ballonnets pour produire des passages d'échappement d'air dans la cloche de la première paraison, qu'on extrude une seconde paraison (29) formée d'une matière thermoplastique fondue à partir du second orifice à l'intérieur du tunnel du moule, qu'on refoule à force la seconde paraison de manière qu'elle s'applique contre et forme un stratifié solide avec les cavités et la cloche sur la première paraison et qu'on refoule l'air entre la seconde paraison et la cloche de la première paraison hors du tuyau par les passages d'échappement d'air situés dans la première paraison.

2. Procédé selon la revendication 1, selon lequel les ballonnets (72) sont formés à l'intérieur des ouvertures de paroi de moule situées dans la seconde région du tunnel du moule.

3. Procédé selon la revendication 1, selon lequel les ballonnets sont formés à l'intérieur de la buse en étant repoussés vers l'intérieur à partir de la surface de moule en forme de cloche.

4. Procédé selon la revendication 2, selon lequel les ballonnets sont formés par une pression d'air positive à l'intérieur du tunnel du moule.

5. Procédé selon la revendication 2, selon lequel les ballonnets sont formés par aspiration à travers les ouvertures de la paroi du moule dans la seconde région.

6. Procédé selon la revendication 4, selon lequel l'aspiration à travers les ouvertures de la paroi du moule dans la seconde région du tunnel du moule est suffisante pour rompre la première paraison sans rompre la seconde paraison.

7. Procédé selon la revendication 1, selon lequel la première paraison est rompue par déplacement de la première paraison sur un outil de perçage (80) prévu dans chaque ouverture de la paroi de moule.

8. Procédé selon la revendication 7, selon lequel la seconde paraison est repoussée contre la cloche dans la première paraison au moyen d'une pression pneumatique et contre les creux situés dans la première paraison au moyen de la combinaison d'une pression pneumatique et d'une pression mécanique.

9. Dispositif pour fabriquer un tuyau en matière plastique à paroi double, ledit dispositif comprenant une extrudeuse possédant une buse (17) pourvue d'un premier orifice (16) et d'un second orifice (22) en aval du premier orifice, la buse délivrant des première et seconde paraisons (18,24) de la matière thermoplastique respectivement à travers les premier et second orifices pour former des parois extérieure et intérieure du tuyau à l'intérieur d'un tunnel de moule mobile possédant une première région (21) pourvue d'une surface de moule cannelée, et une seconde région (34) possédant une surface de moule en forme de cloche pour former respectivement une partie de tuyau cannelée et une partie de tuyau à manchon, le dispositif étant caractérisé en ce que la surface du moule en forme de cloche comporte des ouvertures (70) de la paroi de moule à travers lesquelles les ouvertures d'échappement sont formées dans la paroi extérieure de la partie de tuyau retroussée, ledit dispositif comprenant des moyens pour repousser la première paraison contre et former des crêtes et des creux alternés (23,31) sur la surface de moule cannelée et des moyens appliquant une pression différentielle pour repousser la première paraison contre et former une cloche sur la surface du moule en forme de cloche et former des ballonnets (72) dans la première paraison au niveau des ouvertures de la paroi, des moyens pour rompre les ballonnets pour former les ouvertures d'échappement d'air et des moyens pour repousser la seconde paraison contre et former un stratifié solide avec les creux de la première paraison et avec la cloche de la première paraison, à l'endroit situé entre les première et seconde paraisons est libéré par les ouvertures d'échappement d'air situées dans la première paraison et hors du dispositif par les ouvertures de la paroi de moule de la surface du moule en forme de cloche.

10. Dispositif selon la revendication 9, dans lequel la première région du tunnel du moule comporte en outre une surface de moule (85) formant un renfoncement et une surface de moule (87) formant un crochet.

11. Dispositif selon la revendication 9, dans lequel lesdits moyens servant à repousser la première paraison contre la surface de moule cannelée et la surface de moule en forme de cloche comprennent une pression pneumatique.

12. Dispositif selon la revendication 9, dans lequel une combinaison d'une pression pneumatique et mécanique (32) est utilisée pour repousser à force la seconde paraison contre les creux de la première paraison, et dans lequel seule une pression pneumatique est utilisée pour repousser à force la seconde paraison contre la cloche de la première paraison.

13. Dispositif selon la revendication 11, dans lequel la pression pneumatique est suffisante pour rompre la première paraison au niveau des ouvertures de la paroi du moule dans la seconde région du tunnel du moule sans rompre la seconde paraison.

14. Dispositif selon la revendication 9, dans lequel les ouvertures de la paroi du moule sont prévues dans une partie amont de la seconde région du tunnel du moule.

15. Dispositif selon la revendication 9, dans lequel un dispositif de perçage (80) est prévu dans chaque ouverture de la paroi du moule pour rompre les ballonnets.

16. Dispositif selon la revendication 9, comprenant des moyens pour perforer les crêtes dans la première paraison pour libérer l'air piégé entre les première et seconde paraisons dans les crêtes.
